# FASCICULE DE BREVET EUROPEEN

(11) **EP 2 532 532 B1**
(45) Date de publication et mention de la délivrance du brevet: **26.02.2014**
(21) Numéro de dépôt: 12170711.1
(22) Date de dépôt: 04.06.2012
(51) Int. Cl.: C03B 11/10, C03B 9/193, C03B 9/195, C03B 23/00, B44B 5/00

(54) **Dispositif et procédés de fabrication d'un article en verre creux**
Vorrichtung und Verfahren zur Herstellung eines Artikels aus Hohlglas
Device and methods for manufacturing a hollow glass item

(30) Priorité: 06.06.2011 FR 1154891
(43) Date de publication de la demande: 12.12.2012
(73) Titulaire: Pochet du Courval, 75010 Paris (FR)
(72) Inventeur: Froissart, Pascal, 80430 NEUVILLE COPPEGUEULE (FR); Baliteau, Sébastien, 80220 BOUTTENCOURT (FR)
(74) Mandataire: Jacobson, Claude

(56) Documents cités:
- EP-A2- 1 656 859
- JP-A- 2003 095 671
- US-A1- 2003 026 924

## Description

La présente invention concerne un dispositif et des procédés de fabrication d'un article en verre creux.

L'invention concerne également des articles en verre creux obtenus avec un tel dispositif de fabrication.

Les articles en verre creux, comme par exemple les flacons ou les pots, sont obtenus en déposant au moins une goutte de verre fondu, également appelée paraison, dans une empreinte d'un moule ébaucheur. Une ébauche est préformée dans ce moule ébaucheur au moyen d'un poinçon ou par soufflage d'un gaz dans l'empreinte dudit moule.

Ensuite, l'ébauche ainsi réalisée est démoulée et transférée par exemple par un bras manipulateur, dans un moule finisseur pour former définitivement l'article en verre par soufflage d'un gaz.

Afin de personnaliser ce type d'articles en verre, il est connu de réaliser sur la face externe un ou plusieurs motifs en relief et/ou en creux. Pour cela l'empreinte du moule finisseur comporte un ou plusieurs motifs en relief et/ou en creux qui, lors de l'étape de formation définitive de l'article dans le moule finisseur, viennent s'incruster sur la face externe de cet article en verre du fait de la malléabilité du verre.

Mais, certains utilisateurs d'articles en verre, notamment dans le domaine de la parfumerie ou de la cosmétique, cherchent à personnaliser les articles en verre qu'ils utilisent, en réalisant des décors en relief et/ou en creux à l'intérieur, rappelant ou suggérant la marque et/ou le produit contenu dans les articles. Le ou les décors à l'intérieur peuvent être indépendants de la forme de l'article et ces motifs ou décors peuvent être par exemple des effets optiques particuliers.

L'invention a pour but de proposer un dispositif et des procédés de fabrication permettant de réaliser ce type d'intervention à l'intérieur d'articles en verre.

L'invention a donc pour objet un dispositif de fabrication d'un article en verre creux définissant un contenant comportant une ouverture, un fond opposé à ladite ouverture et au moins une paroi latérale délimitée par une face externe et une face interne, ledit dispositif comprenant au moins un moule et un poinçon déplaçable entre une position passive en dehors dudit au moins un moule et une position active à l'intérieur dudit au moins un moule, caractérisé en ce que le poinçon comporte au moins une portion de marquage munie d'au moins un motif en relief et/ou en creux, déplaçable radialement par des moyens d'actionnement, dans la position active du poinçon, entre une position escamotée et une position en saillie appliquée contre la face interne de la paroi latérale pour imprimer sur cette face interne ledit au moins un motif en relief et/ou en creux.

Le dispositif selon l'invention peut comprendre une ou plusieurs des caractéristiques suivantes, prises isolément ou suivant toutes les combinaisons techniquement possibles :
- ledit au moins un moule est un moule ébaucheur,
- ledit au moins un moule est un moule finisseur,
- le poinçon est formé par une pièce creuse et les moyens d'actionnement comprennent un piston déplaçable à l'intérieur du poinçon dans l'axe de l'article par un moyen de commande entre une première position dans laquelle ladite au moins une portion de marquage est en position escamotée et une seconde position dans laquelle ladite au moins une portion de marquage est en position en saillie,
- le piston comporte, à son extrémité libre, une partie tronconique munie d'au moins une rainure coopérant avec un tenon solidaire de la portion de marquage et de forme complémentaire à ladite rainure, et
- la rainure présente une pente dirigée vers le centre du fond de l'article.

L'invention concerne un premier procédé de fabrication d'un article en verre creux au moyen d'un tel dispositif, **caractérisé en ce qu'**il consiste en les étapes suivantes :
- on dépose dans une empreinte d'un moule ébaucheur au moins une goutte de verre fondu,
- on introduit dans l'empreinte du moule ébaucheur un premier poinçon pour former une ébauche,
- après avoir retiré le premier poinçon, on injecte dans le moule ébaucheur un gaz dans l'ébauche pour former l'article,
- on introduit dans l'article un second poinçon comportant au moins une portion de marquage munie d'au moins un motif en relief et/ou en creux et déplaçable radialement,
- on déplace radialement ladite au moins une portion de marquage entre une position escamotée et une position en saillie appliquée contre la face interne de la paroi latérale de l'article pour imprimer sur cette face interne ledit au moins un motif,
- on ramène ladite au moins une portion de marquage dans sa position escamotée et on retire le second poinçon.

L'invention a pour objet un deuxième procédé de fabrication d'un article en verre creux au moyen d'un tel dispositif, **caractérisé en ce qu'**il consiste en les étapes suivantes :
- on dépose dans une empreinte d'un moule ébaucheur au moins une goutte de verre fondu,
- on introduit dans l'empreinte du moule ébaucheur un poinçon pour former l'article, ledit poinçon comportant au moins une portion de marquage munie d'au moins un motif en relief et/ou en creux et déplaçable radialement,
- on déplace radialement ladite au moins une portion de marquage entre une position escamotée et une position en saillie appliquée contre la face interne de la paroi latérale de l'article pour imprimer sur cette face interne ledit au moins un motif,
- on ramène ladite au moins une portion de marquage dans sa position escamotée et on retire le poinçon.

L'invention a également pour objet un troisième procédé de fabrication d'un article en verre creux au moyen d'un tel dispositif, **caractérisé en ce qu'**il consiste en les étapes suivantes :
- on dépose dans une empreinte d'un moule ébaucheur au moins une goutte de verre fondu,
- on introduit dans l'empreinte du moule ébaucheur un poinçon pour former une ébauche,
- après avoir retiré le poinçon, on transfert l'ébauche dans un moule finisseur et on injecte un gaz dans l'ébauche pour former l'article,
- on introduit dans l'article un poinçon comportant au moins une portion de marquage munie d'au moins un motif en relief et/ou en creux et déplaçable radialement,
- on déplace radialement ladite au moins une portion de marquage entre une position escamotée et une position en saillie appliquée contre la face interne de la paroi latérale de l'article pour imprimer sur cette face interne ledit au moins un motif, et
- on ramène ladite au moins une portion de marquage dans sa position escamotée et on retire le poinçon.

L'invention a également pour objet un article en verre creux définissant un contenant comportant une ouverture, un fond opposé à ladite ouverture et au moins une paroi latérale délimitée par une face interne et une face externe, **caractérisé en ce que** la face interne de ladite au moins une paroi latérale comporte au moins un motif en relief et/ou en creux réalisé au moyen d'un dispositif de fabrication tel que précédemment mentionné.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective et en coupe verticale d'un article en verre comportant intérieurement un motif en relief et/ou en creux et obtenu au moyen d'un dispositif de fabrication, conforme à l'invention,
- la Fig. 2 est une vue schématique en élévation et en coupe verticale du dispositif de fabrication, conforme à l'invention,
- la Fig. 3 est une vue schématique en perspective et en coupe transversale d'un poinçon du dispositif de fabrication, conforme à l'invention, et
- les Figs. 4 et 5 sont des vues schématiques en élévation et en coupe verticale montrant le déplacement d'une portion de marquage du poinçon du dispositif de fabrication, conforme à l'invention.

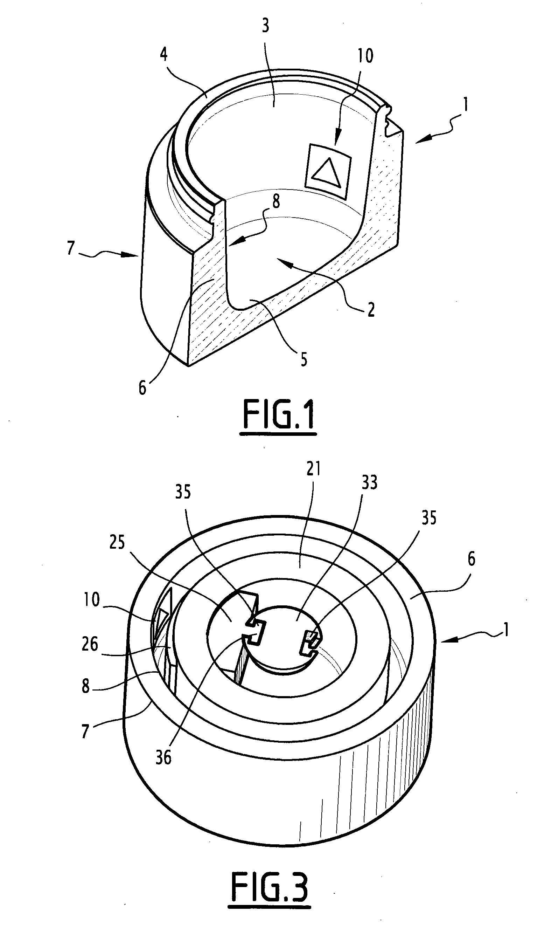

Sur la Fig. 1, on a représenté schématiquement et en coupe verticale un article en verre creux désigné dans son ensemble par la référence 1.

L'article 1 définit un contenant 2 comprenant une ouverture 3 délimitée par un col 4 et un fond 5 opposé à ladite ouverture 3. Le contenant de l'article 1 comprend également au moins une paroi latérale 6 délimitée par une face externe 7 et une face interne 8.

Dans l'exemple de réalisation représenté sur les figures, l'article en verre 1 présente une forme générale circulaire, cet article en verre 1 peut avoir une toute autre forme, comme par exemple une forme générale parallélépipédique.

Ainsi que montré à la Fig. 1, la face interne 8 de la paroi latérale 6 comporte au moins un motif 10 en relief et/ou en creux réalisé par le dispositif de fabrication, conforme à l'invention. La face interne 8 de la paroi latérale 6 peut comporter plusieurs motifs 10 en relief et/ou en creux de formes diverses.

D'une manière générale, les articles 1 en verre de ce type, comme par exemple les flacons ou les pots, sont obtenus en déposant au moins une goutte de verre fondu, également appelée paraison, dans une empreinte d'un moule ébaucheur. Une ébauche est préformée dans ce moule ébaucheur au moyen d'un poinçon ou par soufflage d'un gaz dans l'empreinte dudit moule.

Ensuite, l'ébauche ainsi réalisée est démoulée et transférée par exemple par un bras manipulateur, non représenté, dans un moule finisseur pour former définitivement l'article en verre par soufflage d'un gaz.

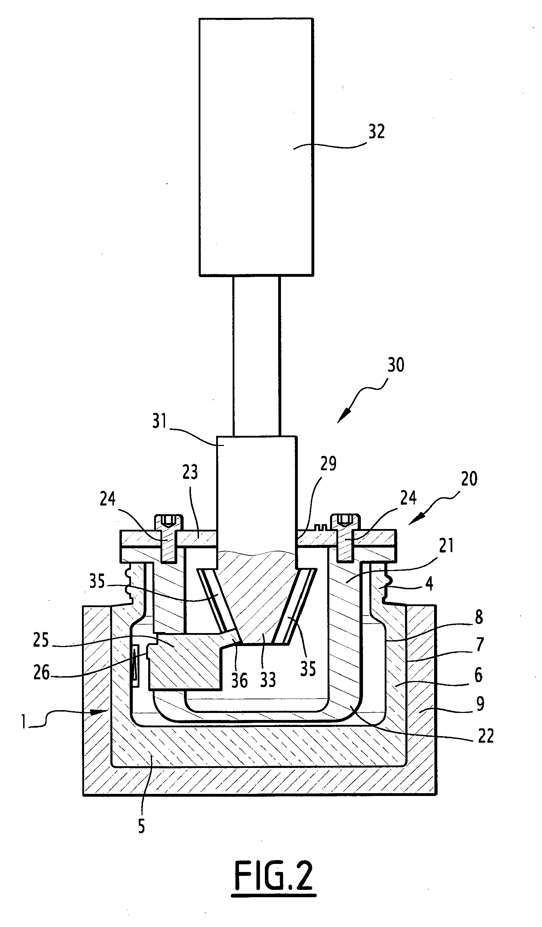

Dans l'exemple de réalisation représenté sur les Figs. 2 à 5, l'article en verre 1 a été préalablement formé dans un moule ébaucheur, non représenté,pour obtenir une ébauche et cette ébauche a été transférée dans un moule finisseur 9, le verre étant à l'état malléable.

Dans ce moule finisseur, un gaz est injecté à l'intérieur de l'ébauche pour former l'article 1, ainsi que montré à la Fig. 2.

Le dispositif de fabrication comprend un poinçon désigné dans son ensemble par la référence 20 qui peut être utilisé dans un moule ébaucheur ou un moule finisseur.

Le poinçon 20 est déplaçable entre une position passive en dehors du moule 9 ou une position active à l'intérieur de ce moule 9.

Comme cela apparaît à la Fig. 2, le poinçon 20 est formé par une pièce creuse 21 de section circulaire et fermée à sa partie inférieure par un fond 22. La partie supérieure de la pièce 22 comporte une ouverture fermée par un couvercle 23 fixé sur la pièce 21 par des organes appropriés, comme par exemple des organes de vissage 24.

La pièce 21 du poinçon 20 comporte au moins une portion de marquage 25 munie, sur sa face externe située à l'extérieur de la pièce 21, d'au moins un motif 26 en relief et/ou en creux.

Dans l'exemple de réalisation représenté sur les figures, le poinçon 20 comporte une seule portion de marquage 25.

Selon une variante, ce poinçon 20 peut comporter plusieurs portions de marquage 25 réparties à la périphérie de la pièce 21.

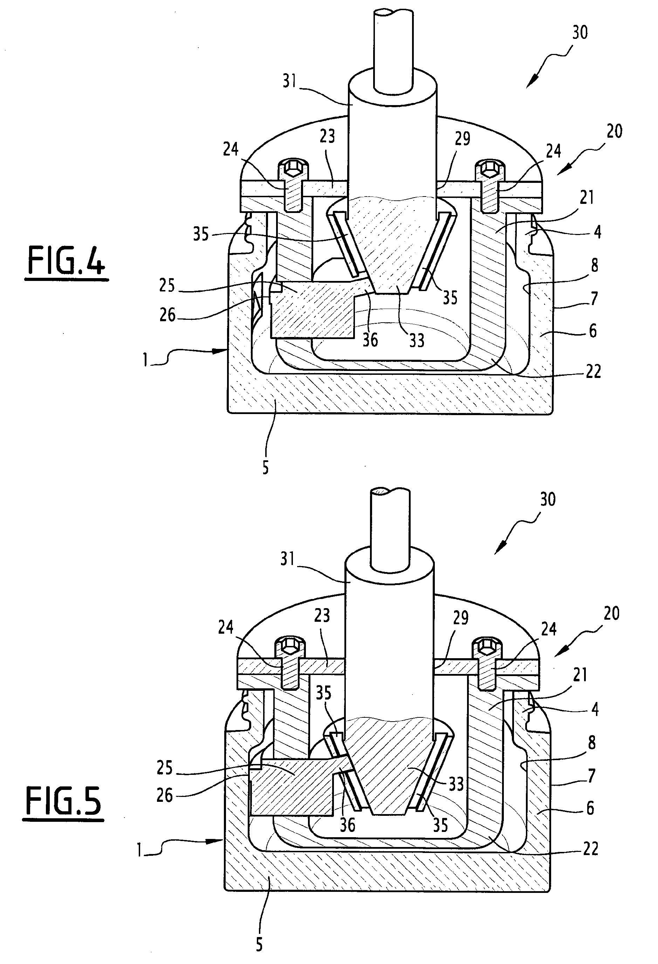

La portion de marquage 25 est déplaçable radialement par des moyens d'actionnement 30, dans la position active du poinçon 20, entre une position escamotée représentée sur les Figs. 2 et 4 et une position en saillie représentée à la Fig. 5 appliquée contre la face interne 8 de la paroi latérale 6 pour imprimer sur cette face interne 8 ledit au moins un motif 26 afin de réaliser le motif 10 en relief et/ou en creux.

Ainsi que montré à la Fig. 2, les moyens 30 d'actionnement comprennent un piston 31 déplaçable à l'intérieur de la pièce 21 du poinçon 20. Ce piston 31 traverse le couvercle 23 par un orifice central 29.

Le piston 31 est déplaçable dans l'axe de l'article 1 par un moyen de commande 32 entre une première position dans laquelle la portion de marquage 25 est en position escamotée (Figs. 2 et 4) et une seconde position dans laquelle ladite portion de marquage 25 est en position en saillie (Fig. 5).

Le moyen de commande 32 est formé par un vérin hydraulique ou pneumatique ou par tout autre organe approprié de type connu.

Le piston 31 comporte à son extrémité libre, une partie tronconique 33 dont la petite base est située à l'extrémité libre du piston 31.

Comme montré plus particulièrement sur les Figs. 3 et 4, la partie tronconique 33 comporte au moins une rainure 35 présentant une pente dirigée vers le centre du fond 5 de l'article 1.

Dans l'exemple de réalisation représenté sur les figures, la partie tronconique 33 comporte deux rainures 35 opposées dont une seule est associée à une portion de marquage 25. Pour cela, la portion de marquage 25 comporte un tenon 36 de forme complémentaire à ladite rainure 35.

Le marquage de la face interne 8 dans un moule finisseur, non représenté, après avoir formé l'article 1 est réalisé de la manière suivante.

Lorsque l'organe de commande 32 est actionné, le piston 31 coulisse dans l'ouverture 29 ménagée dans le couvercle 23 et se déplace dans l'axe de l'article 1 en direction du fond 22 de la pièce 21, c'est-à-dire en direction du fond 5 de l'article 1. La portion de marquage 25 étant maintenue dans la pièce 21, le tenon 36 glisse dans la rainure 25 de la partie tronconique 33 du piston 31 ce qui provoque, du fait de la pente de cette rainure 35, le déplacement radial de la portion de marquage 25 en direction de la face interne 8 de la paroi latérale 6 de l'article 1.

La force ainsi exercée permet d'imprimer le motif 26 sur la face interne 8 afin de réaliser le motif 10 en relief et/ou en creux, le verre étant à l'état malléable.

Dans le cas où l'on souhaite réaliser le marquage de la face interne 8 dans un moule ébaucheur, on procède de la façon suivante.

Tout d'abord, on dépose dans une empreinte d'un moule ébaucheur, non représenté, au moins une goutte de verre fondu et on introduit dans l'empreinte de ce, moule ébaucheur un premier poinçon pour former une ébauche. Après avoir retiré ce premier poinçon, on injecte dans le moule ébaucheur un gaz dans l'ébauche pour former l'article 1.

Ensuite, on introduit dans l'article 1 le poinçon 20 et on déplace radialement la portion de marquage 25 au moyen du piston 31 et de l'organe de commande 32.

Cette portion de marquage 25 est ainsi déplacée radialement entre une position escamotée et une position en saillie appliquée contre la face interne 8 de la paroi latérale 6 de l'article 1 pour imprimer sur cette face interne au moins un motif 10 en relief et/ou en creux. Ensuite, on ramène la portion de marquage 25 dans sa position escamotée au moyen du piston 31 et de l'organe de commande 32 et on retire le poinçon 20.

Selon une variante, l'article 1 peut être transféré dans un moule finisseur, non représenté, et un gaz est injecté dans l'article 1 pour augmenter son volume.

Selon une variante, après avoir déposé dans une empreinte d'un moule ébaucheur au moins une goutte de verre fondu, on introduit directement dans l'empreinte de ce moule ébaucheur le poinçon 20 pour former l'article 1 et également pour réaliser le motif 10 en relief et/ou en creux par déplacement radial de la portion de marquage 25, de manière identique aux précédents modes de réalisation.

Selon une variante, l'article 1 peut ensuite être transféré dans un moule finisseur, non représenté, et un gaz est injecté dans l'article 1 pour augmenter son volume.

La pression apposée par la portion de marquage 25 permet une pénétration du motif 26 dans le verre encore à l'état malléable de l'article 1, sans altérer la géométrie générale de cet article 1. La température du verre doit être suffisamment élevée pour permettre une déformation de la face interne 8 de la paroi latérale 6.

Le marquage de la face interne 8 de la paroi latérale 6 de l'article 1 peut intervenir avant, après ou conjointement à une opération de soufflage destinée à former l'article ou le maintenir en pression interne.

La température du ou des motifs 26 formés sur la portion de marquage 25 peut être régulée afin d'assurer une qualité de rendu et afin d'éliminer les effets de collage ou de déformation. Ce ou ces motifs 26 peuvent être réalisés en acier ou en fonte. Ces matériaux peuvent être revêtus d'une couche de métal projeté à chaud pour en améliorer les performances.

Le ou les motifs ainsi formés sur la face interne 8 de la paroi latérale 6 de l'article en verre1 peuvent ensuite être décorés partiellement ou totalement.

Enfin, la face inférieure de la partie tronconique 33, c'est-à-dire sa petite base, peut comporter aussi au moins un motif en relief et/ou en creux non représenté, permettant d'imprimer ledit au moins un motif sur la face interne du fond 5 de l'article 1 dans la position en saillie de ladite au moins une portion de marquage 25.

## Revendications

1. Dispositif de fabrication d'un article en verre (1) creux définissant un contenant (2) comportant une ouverture (3), un fond (5) opposé à ladite ouverture (3) et au moins une paroi latérale (6) délimitée par une face externe (7) et une face interne (8), ledit dispositif comprenant au moins un moule (9) et un poinçon (20) déplaçable entre une position passive en dehors dudit au moins un moule (9) et une position active à l'intérieur dudit au moins un moule (9), **caractérisé en ce que** le poinçon (20) comporte au moins une portion de marquage (25) munie d'au moins un motif (26) en relief et/ou en creux et déplaçable radialement par des moyens d'actionnement (30), dans la position active du poinçon (20), entre une position escamotée et une position en saillie appliquée contre la face interne (8) de la paroi latérale (6) pour imprimer sur cette face interne ledit au moins un motif (26) en relief et/ou en creux.

2. Dispositif selon la revendication 1, **caractérisé en ce que** ledit au moins un moule (9) est un moule ébaucheur.

3. Dispositif selon la revendication 1, **caractérisé en ce que** ledit au moins un moule (9) est un moule finisseur.

4. Dispositif selon l'une quelconque des revendications 1 à 3, **caractérisé en ce que** le poinçon (20) est formé par une pièce creuse (21) et les moyens d'actionnement (30) comprennent un piston (31) déplaçable à l'intérieur du poinçon (20) dans l'axe de l'article (1) par un moyen de commande (32) entre une première position dans laquelle ladite au moins une portion de marquage (25) est en position escamotée et une seconde position dans laquelle ladite au moins une portion de marquage (25) est en position en saillie.

5. Dispositif selon la revendication 4, **caractérisé en ce que** le piston (31) comporte, à son extrémité libre, une partie tronconique (33) munie d'au moins une rainure (35) coopérant avec un tenon (36) solidaire de la portion de marquage (25) et de forme complémentaire à ladite rainure (35).

6. Dispositif selon la revendication 5, **caractérisé en ce que** la rainure (35) présente une pente dirigée vers le centre du fond (5) de l'article (1).

7. Procédé de fabrication d'un article en verre (1) creux au moyen d'un dispositif selon l'une quelconque des revendications précédentes, **caractérisé en ce qu'**il consiste en les étapes suivantes :
- on dépose dans une empreinte d'un moule ébaucheur au moins une goutte de verre fondu,
- on introduit dans l'empreinte du moule ébaucheur un premier poinçon pour former une ébauche,
- après avoir retiré le premier poinçon, on injecte dans le moule ébaucheur un gaz dans l'ébauche pour former l'article (1),
- on introduit dans l'ébauche un second poinçon (20) comportant au moins une portion de marquage (25) munie d'au moins un motif (26) en relief et/ou en creux et déplaçable radialement.
- on déplace radialement ladite au moins une portion de marquage (25) entre une position escamotée et une position en saillie appliquée contre la face interne (8) de la paroi latérale (6) de l'article (1), pour imprimer sur cette face interne (8) ledit au moins un motif (26),
- on ramène ladite au moins une portion de marquage (25) dans sa position escamotée et on retire le second poinçon (20).

8. Procédé de fabrication d'un articule en verre (1) creux au moyen d'un dispositif selon l'une quelconque des revendications 1 à 6, **caractérisé en ce qu'**il consiste en les étapes suivantes :
- on dépose dans une empreinte d'un moule ébaucheur au moins une goutte de verre fondu,
- on introduit dans l'empreinte du moule ébaucheur un poinçon (20) pour former l'article (1), ledit poinçon comportant au moins une portion de marquage (25) munie d'au moins un motif (26) en relief et/ou en creux et déplaçable radialement,
- on déplace radialement ladite au moins une portion de marquage (25) entre une position escamotée et une position en saillie appliquée contre la face interne (8) de la paroi latérale (6) de l'article pour imprimer sur cette face interne (8) ledit au moins un motif (26),
- on ramène ladite au moins une portion de marquage (25) dans sa position escamotée et on retire le poinçon (20).

9. Procédé de fabrication d'un article en verre (1) creux au moyen d'un dispositif selon l'une quelconque des revendications 1 à 6, **caractérisé en ce qu'**il consiste en les étapes suivantes :
- on dépose dans une empreinte d'un moule ébaucheur au moins une goutte de verre fondu,
- on introduit dans l'empreinte du moule ébaucheur un poinçon pour former une ébauche,
- après avoir retiré le poinçon, on transfère l'ébauche dans un moule finisseur et on injecte un gaz dans l'ébauche pour former l'article en verre (1),
- on introduit dans l'article (1) un poinçon (20) comportant au moins une portion de marquage (25) munie d'au moins un motif (26) en relief et/ou en creux et déplaçable radialement,
- on déplace radialement ladite au moins une portion de marquage (25) entre une position escamotée et une position en saillie appliquée contre la face interne (8) de la paroi latérale (6) de l'article (1) pour imprimer sur cette face interne ledit au moins un motif (26), et
- on ramène ladite au moins une portion de marquage (25) dans sa position escamotée et on retire le poinçon (20).

## Patentansprüche

1. Vorrichtung zur Herstellung eines hohlen Glasartikels (1), der einen Behälter (2) definiert, der eine Öffnung (3), einen entgegengesetzt zur Öffnung liegenden Boden (5) und mindestens eine Seitenwand (6) umfasst, die von einer Außenfläche (7) und einer Innenfläche (8) begrenzt ist, wobei die Vorrichtung mindestens eine Form (9) und einen Stempel (20) aufweist, der zwischen einer passiven Stellung außerhalb der mindestens einen Form (9) und einer aktiven Stellung im Inneren der mindestens einen Form (9) bewegbar ist, **dadurch gekennzeichnet, dass** der Stempel (20) mindestens einen Markierungsbereich (25) aufweist, der mit mindestens einem reliefartigen und/oder vertieften Motiv (26) ausgerüstet ist und der radial in der aktiven Stellung des Stempels (20) von Betätigungsmitteln (30) zwischen einer zurückgezogenen Stellung und einer hervorspringenden, gegen die Innenfläche (8) der Seitenwand (6) drückenden Stellung bewegbar ist, um auf diese Innenfläche das mindestens eine reliefartig und/oder vertiefte Motiv (26) zu drucken.

2. Vorrichtung nach Anspruch 1, **dadurch gekennzeichnet, dass** die mindestens eine Form (9) eine Vorform ist.

3. Vorrichtung nach Anspruch 1, **dadurch gekennzeichnet, dass** die mindestens eine Form (9) eine Endform ist.

4. Vorrichtung nach einem beliebigen der Ansprüche 1 bis 3, **dadurch gekennzeichnet, dass** der Stempel (20) von einem Hohlteil (21) gebildet wird und die Betätigungsmittel (30) einen Kolben (31) aufweisen, der im Inneren des Stempels (20) in der Achse des Artikels (1) von einem Steuermittel (32) zwischen einer ersten Stellung, in der der mindestens eine Markierungsbereich (25) in seiner zurückgezogenen Stellung ist, und einer zweiten Stellung, in der der mindestens eine Markierungsbereich (25) in einer hervorspringenden Stellung ist, beweglich ist.

5. Vorrichtung nach Anspruch 4, **dadurch gekennzeichnet, dass** der Kolben (31) an seinem freien Ende ein kegelstumpfartiges Teil (33) aufweist, das mit mindestens einer Nut (35) ausgerüstet ist, die mit einem Zapfen (36) zusammen arbeitet, der mit dem Markierungsbereich (25) verbunden ist und eine komplementäre Form zu der Nut (35) aufweist.

6. Vorrichtung nach Anspruch 5, **dadurch gekennzeichnet, dass** die Nut (35) eine zu der Mitte des Bodens (5) des Artikels (1) gerichtete Neigung aufweist.

7. Verfahren zur Herstellung eines hohlen Glasartikels (1) mittels einer Vorrichtung nach einem beliebigen der vorhergehenden Ansprüche, **dadurch gekennzeichnet, dass** es aus den folgenden Schritten besteht:
- in das Nest einer Vorform wird mindestens ein Tropfen von geschmolzenem Glas abgelegt,
- in das Nest der Vorform wird ein erster Stempel eingeführt, um einen Rohling zu formen,
- nachdem der erste Stempel zurückgezogen wurde, wird in die Vorform ein Gas in den Rohling injiziert, um den Artikel (1) zu formen,
- in den Rohling wird ein zweiter Stempel (20) eingeführt, der mindestens einen Markierungsbereich (25) aufweist, der mit mindestens einem reliefartigen und/oder vertieften Motiv ausgerüstet ist und radial verschiebbar ist,
- der mindestens eine Markierungsbereich (25) wird radial zwischen einer zurückgezogenen Stellung und einer herausragenden, gegen die Innenfläche (8) der Seitenwand (6) des Artikels (1) drückenden Stellung verschoben, um auf diese Innenfläche (8) das mindestens eine Motiv (26) zu drucken,
- der mindestens eine Markierungsbereich (25) wird in seine zurückgezogene Stellung zurückgeführt und der zweite Stempel (20) wird zurückgezogen.

8. Verfahren zur Herstellung eines hohlen Glasartikels (1) mittels einer Vorrichtung nach einem beliebigen der Ansprüche 1 bis 6, **dadurch gekennzeichnet, dass** es aus den folgenden Schritten besteht:
- in das Nest einer Vorform wird mindestens ein Tropfen von geschmolzenem Glas abgelegt,
- in das Nest der Vorform wird ein Stempel (20) eingeführt, um den Artikel (1) zu formen, wobei der Stempel mindestens einen Markierungsbereich (25) aufweist, der mit mindestens einem reliefartigen und/oder vertieften Motiv (26) versehen ist und radial verschiebbar ist,
- der mindestens eine Markierungsbereich (25) wird radial zwischen einer zurückgezogenen Stellung und einer herausragenden, gegen die Innenfläche (8) der Seitenwand (6) des Artikels drückenden Stellung verschoben, um auf diese Innenfläche (8) das mindestens eine Motiv (26) zu drucken,
- der mindestens eine Markierungsbereich (25) wird in seine zurückgezogene Stellung zurückgeführt und der Stempel (20) wird zurückgezogen.

9. Verfahren zur Herstellung eines hohlen Glasartikels (1) mittels einer Vorrichtung nach einem beliebigen der vorhergehenden Ansprüche, **dadurch gekennzeichnet, dass** es aus den folgenden Schritten besteht:
- in das Nest einer Vorform wird mindestens ein Tropfen von geschmolzenem Glas abgelegt,
- in das Nest der Vorform wird ein Stempel eingeführt, um einen Rohling zu formen,
- nachdem der Stempel zurückgezogen wurde, wird der Rohling in eine Endform gefördert und es wird ein Gas in den Rohling injiziert, um den Glasartikel (1) zu formen,
- in den Artikel (1) wird ein Stempel (20) eingeführt, der mindestens einen Markierungsbereich (25) aufweist, der mit mindestens einem reliefartigen und/oder vertieften Motiv (26) ausgerüstet ist und radial verschiebbar ist,
- der mindestens eine Markierungsbereich (25) wird radial zwischen einer zurückgezogenen Stellung und einer herausragenden, gegen die Innenfläche (8) der Seitenwand (6) des Artikels (1) drückenden Stellung verschoben, um auf diese Innenfläche (8) das mindestens eine Motiv (26) zu drucken, und
- der mindestens eine Markierungsbereich (25) wird in seine zurückgezogene Stellung zurückgeführt und der Stempel (20) wird zurückgezogen.

## Claims

1. A device for manufacturing a hollow glass article (1) defining a container (2) including an aperture (3), a bottom (5) opposite to said aperture (3) and at least one side wall (6) delimited by an external face (7) and an internal face (8), said device comprising at least one mold (9) and a punch (20) displaceable between a passive position outside said at least one mold (9) and an active position inside said at least one mold (9), **characterized in that** the punch (20) includes at least one marking portion (25) provided with at least one raised and/or recessed pattern (26) and radially displaceable by actuation means (30), in the active position of the punch (20), between a retracted position and protruding position applied against the internal face (8) of the side wall (6) in order to imprint on this internal face said at least one raised and/or recessed pattern (26).

2. The device according to claim 1, **characterized in that** said at least one mold (9) is a blank mold.

3. The device according to claim 1, **characterized in that** said at least one mold (9) is a finishing mold.

4. The device according to any of claims 1 to 3, **characterized in that** the punch (20) is formed by a hollow part (21) and the actuation means (30) comprise a piston (31) displaceable inside the punch (20) along the axis of the article (1) by a control means (32) between a first position in which said at least one marking portion (25) is in a retracted position and a second position in which said at least one marking portion (25) is in a protruding position.

5. The device according to claim 4, **characterized in that** the piston (31) includes at its free end, a frusto-conical portion (33) provided with at least one groove (35) cooperating with a tenon (36) integral with the marking portion (25) and with a shape mating said groove (35).

6. The device according to claim 5, **characterized in that** the groove (35) has a slope directed towards the center of the bottom (5) of the article (1).

7. A method for manufacturing a hollow glass article (1) by means of a device according to any of the preceding claims, **characterized in that** it consists in the following steps:
- at least one drop of molten glass is deposited in an imprint of a blank mold,
- a first punch for forming a blank is introduced into the imprint of the blank mold,
- after having withdrawn the first punch, in the blank mold, gas is injected into the blank in order to form the article (1),
- a second punch (20) including at least one marking portion (25) provided with at least one raised and/or recessed pattern (26) and radially displaceable, is introduced into the blank,
- said at least one marking portion (25) is radially displaced between a retracted position and a protruding position applied against the internal face (8) of the side wall (6) of the article (1), in order to imprint on this internal face (8), said at least one pattern (26),
- said at least one marking portion (25) is brought back into its retracted position and the second punch (20) is withdrawn.

8. A method for manufacturing a hollow glass article (1) by means of a device according to any of claims 1 to 6, **characterized in that** it consists in the following steps:
- at least one drop of molten glass is deposited in an imprint of a blank mold,
- a punch (20) is introduced into the imprint of the blank mold in order to form the article (1), said punch including at least one marking portion (25) provided with at least one raised and/or recessed pattern (26) and radially displaceable,
- said at least one marking portion (25) is radially displaced between a retracted position and a protruding position applied against the internal face (8) of the side wall (6) of the article in order to imprint on this internal face (8), said at least one pattern (26),
- said at least one marking portion (25) is brought back into its retracted position and the punch (20) is withdrawn.

9. A method for manufacturing a hollow glass article (1) by means of a device according to any of claims 1 to 6, **characterized in that** it consists in the following steps:
- at least one drop of molten glass is deposited in an imprint of a blank mold,
- a punch is introduced into the imprint of the blank mold in order to form a blank,
- after having withdrawn the punch, the blank is transferred into a finishing mold and gas is injected into the blank in order to form the glass article (1),
- a punch (20) including at least one marking portion (25) provided with at least one raised and/or recessed pattern (26) and radially displaceable is introduced into the article (1),
- said at least one marking portion (25) is radially displaced between a retracted position and a protruding position applied against the internal face (8) of the side wall (6) of the article (1) in order to imprint on this internal face said at least one pattern (26) and
- said at least one marking portion (25) is brought back into its retracted position and the punch (20) is withdrawn.
